**Europäisches Patentamt**

**European Patent Office**

**Office européen des brevets**

(19)

(11) Veröffentlichungsnummer: **0 250 836 B1**

# EUROPÄISCHE PATENTSCHRIFT

(12)

(45) Veröffentlichungstag der Patentschrift: **02.02.94**

(51) Int. Cl.5: **C08L 51/04**, C08L 25/08

(21) Anmeldenummer: **87107390.4**

(22) Anmeldetag: **21.05.87**

(54) **Verfahren zur Herstellung einer thermoplastischen Formmasse.**

(30) Priorität: **23.05.86 DE 3617361**

(43) Veröffentlichungstag der Anmeldung:
**07.01.88 Patentblatt 88/01**

(45) Bekanntmachung des Hinweises auf die
Patenterteilung:
**02.02.94 Patentblatt 94/05**

(84) Benannte Vertragsstaaten:
**BE DE FR GB NL**

(56) Entgegenhaltungen:
**EP-A- 0 029 174**
**US-A- 3 322 734**

(73) Patentinhaber: **BASF Aktiengesellschaft**
**Carl-Bosch-Strasse 38**
**D-67063 Ludwigshafen(DE)**

(72) Erfinder: **Echte, Adolf, Dr.**
**Leuschnerstrass 42**
**D-6700 Ludwigshafen(DE)**
Erfinder: **Schwaben, Hans-Dieter**
**Lindenstrass 3**
**D-6721 Freisbach(DE)**
Erfinder: **Klaerner, Peter**
**Hauptstrasse 62**
**D-6719 Battenberg(DE)**

EP 0 250 836 B1

## Beschreibung

Die Erfindung betrifft eine thermoplastische Formmasse aus einer Hartmatrix, einer Weichphase und einer weiteren Komponente.

Zum Stand der Technik nennen wir

(1) A.A. Donatelli, L.H. Sperling und D.A. Thomas, Macromolecules $\underline{9}$, 671 (1976)

(2) US-P 3 322 734 und

(3) EP-B1 0029174

In (1) werden schlagfeste thermoplastische Formmassen auf Basis von Styrol-Butadien-Copolymeren (SBR) und Polystyrol beschrieben. Hierbei geschieht die Vernetzung über kovalente Bindungen durch Aufquellen eines vorher radikalisch vernetzten SBR's mit einer Mischung aus Styrol und Divinylbenzol in Gegenwart von Dicumylperoxid als Radikalstarter und anschließender radikalischer Polymerisation. Nachteilig ist bei diesem Verfahren, daß die entstandenen kovalent vernetzten Polymere thermoplastisch nicht verarbeitbar sind.

In (2) werden z.B. ionisch vernetzte Copolymere aus Styrol und Methacrylsäure beschrieben, die thermoplastisch verarbeitbar sind.

In (3) werden schlagfeste thermoplastische Formmassen mit erhöhter Spannungsrißbeständigkeit beschrieben, bei denen in der Hartmatrix Ester von ungesättigten Carbonsäuren verwendet werden. Diese Massen enthalten keinen ionischen Vernetzer.

In (2) berichtet der Autor über eine Reihe von Vorteilen in den mechanischen Eigenschaften, die ionisch vernetzte Copolymerisate gegenüber herkömmlichen Co-Polymeren mit sich bringen.

Um diese Vorteile auf dem bedeutenden Sektor der schlagfesten Formmassen nutzen zu können, bestand die Aufgabe, in einem Verfahrensschritt schlagfeste Formmassen unter Verwendung ionischer Vernetzer herzustellen, die thermoplastisch verarbeitbar sind und gute mechanische Eigenschaften aufweisen.

Die Erfindung betrifft somit ein Verfahren zur Herstellung einer schlagfesten thermoplastischen Formmasse, enthaltend

A 60 bis 95 Gew.%, bezogen auf A + B + C, einer Hartmatrix, die

$a_1$) 95 bis 99,8 Gew.%, bezogen auf A, mindestens eines vinylaromatischen Monomeren mit 8 bis 12 C-Atomen und

$a_2$) 0,2 bis 5 Gew.% eines polaren monoethylenisch ungesättigten Monomeren enthält,

B mindestens 3 Gew.%, bezogen auf A + B + C, einer Weichphase, hergestellt durch radikalische Polymerisation der die Hartmatrix aufbauenden Monomeren $a_1$ und $a_2$ in Gegenwart einer elastomeren Pfropfgrundlage $b_1$ auf Basis von Homopolybutadien mit einem mittleren Molgewicht von 50.000 bis 450.000 (Gewichtsmittel) oder eines Zweiblock-Copolymerisats des Butadiens mit 40 bis 90 Gew.% Styrol, bezogen auf $b_1$, mit einem mittleren Molgewicht von 100.000 bis 300.000 (Gewichtsmittel).

C 0,1 bis 5 Gew.%, bezogen auf A + B + C, einer weiteren Komponente

durch an sich bekannte Polymerisation und anschließende Aufarbeitung und Gewinnung des Wertproduktes. Das Verfahren ist dadurch gekennzeichnet, daß die Polymerisation der die Hartmatrix aufbauenden Monomeren $a_1$ und $a_2$ in Gegenwart sowohl der elastomeren Pfropfgrundlage als auch der Komponente C erfolgt und daß als Monomeres $a_2$ Acrylsäure oder Methacrylsäure verwendet wird und die Komponente C einen ionischen Vernetzer darstellt, der aus der Gruppe der Alkalisalze, der Erdalkalisalze oder der Zinksalze von geradkettigen Fettsäuren mit 16 bis 22 C-Atomen ausgewählt ist.

Nachfolgend werden der Aufbau der nach dem erfindungsgemäßen Verfahren herstellbaren Formmasse sowie das erfindungsgemäße Verfahren und die dafür erforderlichen Ausgangsstoffe und Hilfsmittel beschrieben.

Die Formmasse enthält die Bestandteile A, B und C. Sie kann übliche Zusatzstoffe als Komponente D enthalten.

Die Formmasse ist aufgebaut aus, jeweils bezogen auf A + B + C:

60 bis 95 Gew.%, vorzugsweise 70 bis 90 Gew.%, insbesondere 80 bis 90 Gew.% einer Hartmatrix A.

Die Hartmatrix enthält einpolymerisiert, bezogen auf A, die folgenden Mengen an Monomeren:

$a_1$: 95 bis 99,8 Gew.%,

$a_2$: 0,2 bis 5 Gew.%.

Die Hartmatrix kann weitere Monomere in einer Menge von mindestens 1 Gew.% enthalten.

Die Weichphase B ist in der Formmasse, bezogen auf A + B + C in einer Menge von mindestens 3 Gew.% enthalten. Sie wird hergestellt durch an sich bekannte radikalische Polymerisation einer entsprechenden Menge der die Hartmatrix aufbauenden Monomeren $a_1$ und $a_2$ in Gegenwart von 3 bis 25 Gew.%, vorzugsweise 4 bis 15 Gew.%, insbesondere 7 bis 13 Gew.%, bezogen auf B, der elastomeren Pfropfgrund-

2

lage $b_1$ sowie erfindungsgemäß 0,1 bis 5 Gew.%, vorzugsweise 0,2 bis 3 Gew.% und insbesondere 0,5 bis 2,0 Gew.%, bezogen auf die Summe A + B + C, des weiteren Bestandteils C.

Bezogen auf 100 Gew.-Teile A + B + C kann die Formmasse z.B. 1 bis 30 Gew.-Teile der Komponente D (Zusatzstoffe) aufweisen.

Aufbau der Formmasse

Im einzelnen ist die Formmasse aufgebaut (besteht) aus

Komponente A:

Sie enthält
$a_1$) mindestens ein vinylaromatisches Monomeres mit 8 bis 12 C-Atomen. Vorzugsweise wird ausschließlich Styrol verwendet. Außerdem enthält sie
$a_2$) als ein polares monoethylenisch ungesättigtes Monomeres, Acrylsäure oder Methacrylsäure oder Mischungen daraus.

Als weitere Comonomere können Acrylnitril, Methacrylsäuremethylester, N-Phenylmaleinimid oder Maleinsäureanhydrid einpolymerisiert werden.

Komponente B:

Die Komponente B ist ein Pfropfmischpolymerisat aufgebaut aus einer elastomeren Pfropfgrundlage $b_1$ auf Basis von Homopolybutadien und/oder einem Zweiblockcopolymerisat des Butadiens mit 40 bis 90 Gew.%, insbesondere 40 bis 60 Gew.%, bezogen auf $b_1$ an Styrol.

Auf diese Pfropfgrundlage sind die Monomeren $a_1$ und $a_2$ und gegebenenfalls weitere Monomere gepfropft.

Zu der Weichphase B im Sinne der Erfindung zählt auch das in der Weichphase occludierte Copolymerisat der die Hartmatrix aufbauenden Monomeren.

Als Pfropfgrundlage $b_1$ dient entweder Homopolybutadien, und zwar vom bekannten medium- oder high-cis Typ mit Molekulargewichten im Bereich von 50.000 bis 450.000 (Gewichtsmittel); es wird bevorzugt ein elastomeres Copolymerisat, nämlich ein lineares Styrol-Butadien-Zwei-Blockcopolymeres verwendet, das durch anionische Polymerisation mit Hilfe von Lithiuminitiatoren hergestellt worden ist. Der eine Block ist aus Styrol oder substituierten Styrolen aufgebaut, der andere Block des Blockcopolymerisats ist vorzugsweise nur aus Butadien aufgebaut.

Das bevorzugte Copolymerisat ist ein Styrol-Butadien-Zwei-Blockcopolymerisat, das einen Blockpolystyrolgehalt von 40 bis 90 Gew.%, bezogen auf das Blockcopolymerisat, aufweist (Rest Butadien). Das Gewichtsmittel des Molekulargewichts eines solchen Blockcopolymerisats beträgt 100.000 bis 300.000.

Komponente C:

Die Komponente C stellt einen sogenannten ionischen Vernetzer dar, der aus der Gruppe der Alkalisalze, der Erdalkalisalze und der Zinksalze von geradkettigen Fettsäuren mit 16 bis 22 C-Atomen, insbesondere der Stearinsäure, ausgewählt ist. Bevorzugt werden die Natrium-, Kalium- und Zinkstearate, von denen sich insbesondere bei höherer Temperatur von 86 bis 150°C die Zinkstearate leicht und vollständig in Mischungen der Monomeren $a_1$ und $a_2$ lösen; die anderen Stearate sind leicht dispergierbar.

Der gleichzeitige Einbau von Acrylsäure und/oder Methacrylsäure und ionischem Vernetzer kann bewirken, daß die Hartmatrix als Netzwerk vorliegt, wobei die Netzpunkte ionische Gruppen sind.

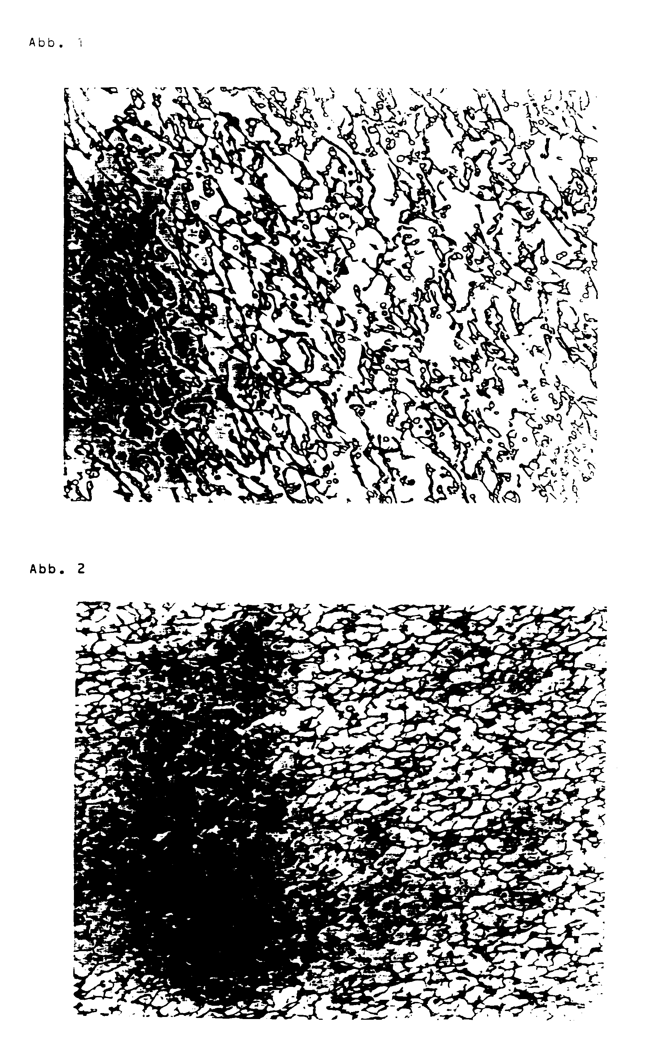

Durch Pfropfung des Kautschuks mit den Monomeren $a_1$) und $a_2$) der Hartmatrix in Gegenwart des ionischen Vernetzers kann je nach den Verfahrensbedingungen auch die Weichphase als zweites Netzwerk aufgebaut werden. Die resultierende Morphologie kann wie folgt beschrieben werden: die dem Fachmann wohl bekannten Kautschukteilchen in schlagfesten Formmassen (Zellen-, Kapsel-, Tropfenteilchen; s. A. Echte, Ang.Makr.Chem. 58/59, 175 (1977)) sind durch Kautschukbänder untereinander netzwerkartig verknüpft, wobei die Breite dieser Bänder nach elektronenmikroskopischen Aufnahmen zwischen 0,02 und 1 $\mu$m liegt (vgl. Abb. 1).

Dieser Aufbau kann so weit geführt werden, daß keine diskreten Kautschukpartikel in obigem Sinne erhalten werden. Die Weichphase besteht dann z.B. aus miteinander verbundenen Bändern, die ein Netzwerk aufbauen (vgl. Abb. 2).

Komponente D:

Als Hilfsmittel bei der Herstellung der Formmasse können die dem Fachmann bekannten Mineralöle, Molekulargewichtsregler, Antioxidantien etc. verwendet werden. Insbesondere auch für die Verarbeitung der nach dem erfindungsgemäßen Verfahren erhaltenen Wertprodukte kann der Fachmann übliche Zusatzstoffe verwenden. Als solche seien genannt: Farbstoffe, Antioxidantien, Schmiermittel, Antistatika, Stabilisatoren und Flammschutzmittel in den dem Fachmann bekannten Mengen.

Auch die Abmischung der Formmasse mit anderen verträglichen oder unverträglichen Polymerisaten oder Copolymerisaten ist ohne weiteres möglich.

Herstellung der Formmasse

Die Formmasse wird durch radikalische Polymerisation der die Hartmatrix aufbauenden Monomeren $a_1$ und $a_2$, d.h. insbesondere von Styrol und (Meth)acrylsäure, in Gegenwart der elastomeren Pfropfgrundlage $b_1$, also der Kautschuk-Komponente (Polybutadien oder Styrol-Butadien-Zwei-Blockcopolymeres) sowie des ionischen Vernetzers in an sich bekannter Weise erhalten.

Die Polymerisation wird entweder thermisch oder mit Hilfe der üblichen Initiatoren gestartet. Sie kann kontinuierlich oder bevorzugte diskontinuierlich durchgeführt werden. Das kontinuierliche Verfahren ist in DE-AS 17 70 392, das diskontinuierliche in DE-AS 26 13 352 hinreichend beschrieben.

In dem in den Beispielen 1 bis 3 bevorzugten diskontinuierlichen Verfahren wird auf dem Fachmann bekannte Art und Weise in Masse oder Lösung bei Temperaturen zwischen 50 und 200°C bis zu einem Umsatz von 10 bis 40 % polymerisiert, anschließend in Wasser suspendiert und bis zu einem Umsatz von 95 bis 100 % auspolymerisiert und in bekannter Weise das Wertprodukt isoliert.

Die in den Beispielen und Vergleichsversuchen beschriebenen Parameter (s. Tabelle 1) wurden wie folgt bestimmt:
  1. Lochkerbschlagzähigkeit $a_{KL}$ in KJ/m$^2$ nach DIN 53 753
  2. Reißdehnung, RD, in % nach DIN 53 455
  3. Streckspannung, ST, in N/mm$^2$ nach DIN 53 455
  4. Vicattemperatur, VT, in °C nach DIN 53 460
  5. Gelgehalt in Toluol
Zur Durchführung aller Versuche diente als elastomere Pfropfgrundlage ein Homopolybutadien, das im Handel erhältlich ist (®Buna HX529C) und ein mittleres Molekulargewicht von 295.000 (Gewichtsmittel) und einen cis 1,4-Gehalt von 37 % aufweist.

Als Suspensionshilfsmittel diente ®Luviskol K90, ein Handelsprodukt auf Basis Ethylenoxid.

Beispiele 1 bis 4 und Vergleichsversuche I bis III

Die nachfolgenden Beispiele und Vergleichsversuche sollen das erfindungsgemäße Verfahren näher erläutern, ohne jedoch die Breite der Erfindung zu schmälern. Alle in den Beispielen und Vergleichsversuchen genannten Teile und Prozente beziehen sich auf das Gewicht.

Beispiel 1

In einem mit einem Anker-Rührer ausgestatteten Kessel mit einem Fassungsvermögen von 5 Litern wurden 88,0 Teile Styrol, 7,9 Teile Polybutadien Buna HX529C von Bayer, 0,4 Teile Acrylsäure, 2,0 Teile eines medizinischen Weißöls, 0,1 Teile eines sterisch gehinderten Phenols als Stabilisator (®Irganox 1076), 0,1 Teile Dibenzoylperoxid sowie 1,5 Teile Zinkstearat als ionisches Vernetzungsmittel gegeben. Anschließend wurde isotherm bei 86°C und 200 Rührerumdrehungen/Minute bis zu einem Umsatz von 22 %, bezogen auf die Summe aus Styrol und Acrylsäure, polymerisiert. Danach wurde in wäßriger Suspension weiterpolymerisiert. Hierzu wurden 0,1 Teile Dicumylperoxid und 1800 ml Wasser, 18 g eines Suspensionshilfsmittels auf Basis Ethylenoxid (®Luviskol K90) und 1,8 g Natriumphosphat zugegeben. In Suspension wird bei 300 Rührerumdrehungen/Minute jeweils isotherm 3 Stunden bei 110°C, 3 Stunden bei 130°C und 6 Stunden bei 140°C bis zu einem Umsatz von 100 %, bezogen auf die Summe aus Styrol und Acrylsäure, polymerisiert. Auf diese Weise wurde ein Produkt erhalten, das die in Abb. 1 gezeigte Morphologie besitzt. Deutlich sind Kapselteilchen zu erkennen, die im vorliegenden Falle durch Bänder aus Polybutadien verbunden sind.

4

Beispiel 2

Auf die gleiche Art und Weise wie in Beispiel 1 beschrieben, jedoch mit 86,9 Teilen Styrol, 1,8 Teilen Acrylsäure und 1,2 Teilen Zinkstearat unter Beibehaltung der Anteile der übrigen Einsatzstoffe wurde ein Produkt erhalten, das die in Abb. 2 gezeigte Morphologie besitzt. In Abb. 2 sind im Unterschied zu dem Produkt von Beispiel 1 keine diskreten Kautschukteilchen mehr vorhanden.

Beispiel 3

Auf die gleiche Art und Weise, wie in Beispiel 1 beschrieben, jedoch mit 0,7 Teilen Natriumstearat und 88,8 Teilen Styrol unter Beibehaltung der Anteile der übrigen Einsatzstoffe wurde ein Produkt erhalten, dessen Schlagzähigkeit, wie Tabelle 1 zeigt, gegenüber dem des Vergleichsversuchs I stark angehoben ist.

Beispiel 4

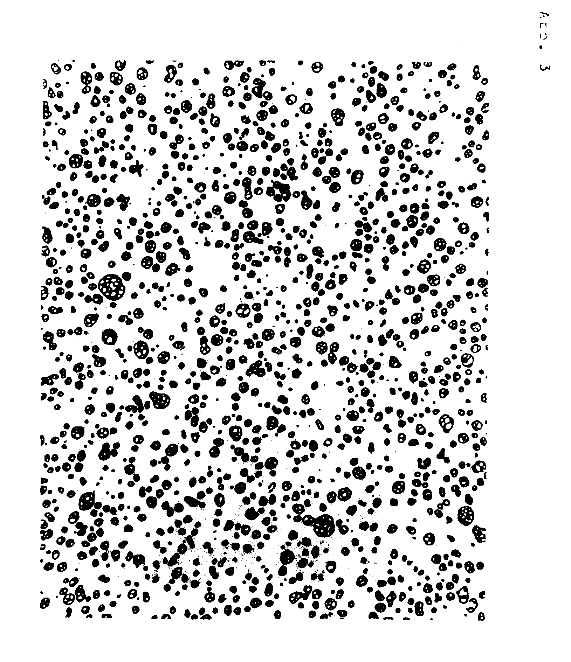

In einen mit einem Ankerrührer ausgestatteten Kessel mit einem Fassungsvermögen von 160 Litern wurden die gleichen Komponenten wie in Beispiel 1 in den dort angegebenen Gewichtsverhältnissen gegeben. Anschließend wurde isotherm bei 86°C und 70 Rührerumdrehungen/Minute bis zu einem Umsatz von 23 %, bezogen auf die Summe aus Styrol und Acrylsäure, polymerisiert. Danach wurde in wäßriger Suspension weiterpolymerisiert. Hierzu wurden 0,1 Teile Dicumylperoxid, 90 l Wasser, 900 g ®Luviskol K90 und 90 g Natriumphosphat zugegeben. In Suspension wurde bei 150 Rührerumdrehungen/Minute jeweils isotherm 3 Stunden bei 110°C, 3 Stunden bei 130°C und 6 Stunden bei 140°C bis zu einem Umsatz von 100 %, bezogen auf die Summe aus Styrol und Acrylsäure, polymerisiert. Auf diese Weise wurde ein Produkt erhalten, das überwiegend aus Zellenteilchen besteht [s. Abb. 3).

Beispiel 5

Auf die gleiche Art und Weise, wie in Beispiel 1 beschrieben, jedoch mit 85,30 Teilen Styrol, 7.9 Teilen Polybutadien Buna HX 529 C von Bayer, 5 Teilen Methacrylsäure, sowie 0,1 Teilen eines sterisch gehinderten Phenols als Stabilisator (Irganox 1076), 0.1 Teilen Dibenzoylperoxid, 0,1 Teilen t-Dodecylmercaptan sowie 1,5 Teilen Zinkstearat wurde ein Produkt erhalten, das eine Zellenteilchenmorphologie und einen Gelgehalt von 36,3 % besitzt. Die mechanischen Daten sind: $a_{KL}$ = 15,5 KJ/m$^2$; RD = 5 %; ST = 21,6 N/mm$^2$; VT = 93,4°C.

Beispiel 6

Auf die gleiche Art und Weise, wie in Beispiel 1 beschrieben, jedoch mit 88,0 Teilen Styrol, 9,0 Teilen Polybutadien Buna HX 529 C von Bayer, 2 Teilen Methacrylsäure sowie 0,1 Teilen eines sterisch gehinderten Phenols als Stabilisator (Irganox 1076), 0,1 Teilen Dibenzoylperoxid, 0,1 Teilen t-Dodecylmercaptan sowie 0,7 Teilen Natriumstearat wurde ein Produkt mit einer Zellenteilchenmorphologie und einem Gelgehalt von 39,9 % erhalten. Die mechanischen Daten sind: $a_{KL}$ = 17,4 KJ/m$^2$; RD = 31 %; ST = 14,7 N/mm$^2$; VT = 92,6°C.

Vergleichsversuche I und II

Die Vergleichsversuche wurden, wie vorstehend beschrieben, durchgeführt. Dabei wurde in beiden Fällen kein Zinkstearat zugesetzt. Man erhält in beiden Fällen eine, dem Fachmann bekannte, Mischmorphologie aus Kapselteilchen mit einigen Zellenteilchen.

Vergleichsversuch III

Dieser Vergleichsversuch wurde, wie vorstehend beschrieben, durchgeführt, jedoch wurde kein Zinkstearat zugesetzt.

Auch hier besitzt das ionisch vernetzte Produkt einen höheren Gelgehalt als das unvernetzte. Damit einher geht wiederum ein Anstieg der Lochkerbschlagzähigkeit (s. Tabelle).

Aus der Tabelle geht hervor, daß durch die ionische Vernetzung mittels Zinkstearat und Natriumstearat, die durch den erhöhten Gelgehalt der Beispiele 1 und 2 gegenüber den Vergleichsversuchen I und II, angezeigt wird, eine Anhebung der Schlagzähigkeit erfolgt.

In den Abbildungen 1 bis 3 wurde jeweils die Vergrößerung 1:5000 gewählt, so daß 1 $\mu$m einem halben Zentimeter entspricht.

Vergleichsversuche I und II

Die Vergleichsversuche wurden, wie vorstehend beschrieben, durchgeführt. Dabei wurde in beiden Fällen kein Zinkstearat zugesetzt. Man erhält in beiden Fällen eine, dem Fachmann bekannte, Mischmorphologie aus Kapselteilchen mit einigen Zellenteilchen.

Vergleichsversuch III

Dieser Vergleichsversuch wurde, wie vorstehend beschrieben, durchgeführt, jedoch wurde kein Zinkstearat zugesetzt.

Auch hier besitzt das ionisch vernetzte Produkt einen höheren Gelgehalt als das unvernetzte. Damit einher geht wiederum ein Anstieg der Lochkerbschlagzähigkeit (s. Tabelle).

Aus der Tabelle geht hervor, daß durch die ionische Vernetzung mittels Zinkstearat und Natriumstearat, die durch den erhöhten Gelgehalt der Beispiele 1 und 2 gegenüber den Vergleichsversuchen I und II, angezeigt wird, eine Anhebung der Schlagzähigkeit erfolgt.

In den Abbildungen 1 bis 3 wurde jeweils die Vergrößerung 1:5000 gewählt, so daß 1 $\mu$m einem halben Zentimeter entspricht.

Tabelle 1

| | | Zusammensetzung des Produktes | | | | | aKL | RD | ST | VT | Gel-gehalt |
|---|---|---|---|---|---|---|---|---|---|---|---|
| | | Styrol % | Acrylsäure % | Pbu % | Vernetzer % | | (KJ/m²) | (%) | (N/mm²) | (°C) | (%) |
| Beispiel 1 | Zinkstearat | 88,0 | 0,4 | 7,9 | 1,5 | | 16,5 | 8,7 | 21,5 | 89,7 | 33,2 |
| Beispiel 2 | Zinkstearat | 86,9 | 1,8 | 7,9 | 1,2 | | 12,0 | 12,0 | 21,1 | 91,4 | 30,8 |
| Beispiel 3 | Natriumstearat | 88,8 | 0,4 | 7,9 | 0,7 | | 16,4 | 10,3 | 23,6 | 90,5 | 38,5 |
| Beispiel 4 | Zinkstearat | 88,0 | 0,4 | 7,9 | 1,5 | | 14,1 | 8,7 | 24,2 | 86,5 | 31,5 |
| Vergleichs-versuch I | – | 89,5 | 0,4 | 7,9 | – | | 7,8 | 8,7 | 32,6 | 90,7 | 27,6 |
| Vergleichs-versuch II | – | 88,1 | 1,8 | 7,9 | – | | 8,3 | 9,2 | 34,7 | 94,7 | 24,3 |
| Vergleichs-versuch III | – | 89,5 | 0,4 | 7,9 | – | | 8,1 | 9,5 | 31,3 | 92,8 | 28,5 |

## Patentansprüche

1.  Verfahren zur Herstellung einer schlagfesten thermoplastischen Formmasse, enthaltend
    A 60 bis 95 Gew.%, bezogen auf A + B + C, einer Hartmatrix, die

a₁) 95 bis 99.8 Gew.%, bezogen auf A, mindestens eines vinylaromatischen Monomeren mit 8 bis 12 C-Atomen und

a₂) 0,2 bis 5 Gew.% eines polaren monoethylenisch ungesättigten Monomeren, enthält,

B mindestens 3 Gew.%, bezogen auf A + B + C, einer Weichphase, hergestellt durch radikalische Polymerisation der die Hartmatrix aufbauenden Monomeren a₁) und a₂) in Gegenwart einer elastomeren Pfropfgrundlage b₁) auf Basis von Homopolybutadien mit einem mittleren Molgewicht von 50.000 bis 450.000 (Gewichtsmittel) oder eines Zweiblock-Copolymerisates des Butadiens mit 40 bis 90 Gew.% Styrol, bezogen auf b₁), mit einem mittleren Molgewicht von 100.000 bis 300.000 (Gewichtsmittel).

C 0,1 bis 5 Gew.%, bezogen auf A + B + C, einer weiteren Komponente

durch an sich bekannte Polymerisation und anschließender Aufarbeitung und Gewinnung des Wertproduktes,

dadurch gekennzeichnet, daß die Polymerisation der die Hartmatrix aufbauenden Monomeren a₁) und a₂) in Gegenwart sowohl der elastomeren Pfropfgrundlage als auch der Komponente C erfolgt und daß als Monomeres a₂) Acrylsäure oder Methacrylsäure verwendet wird, und die Komponente C einen ionischen Vernetzer darstellt, der aus der Gruppe der Alkalisalze, der Erdalkalisalze, der Zinksalze von geradkettigen Fettsäuren mit 16 bis 22 C-Atomen, ausgewählt ist.

2. Verwendung einer Formmasse, hergestellt gemäß Anspruch 1, zur Herstellung von Formteilen.

**Claims**

1. A process for the preparation of an impact-resistant thermoplastic molding material comprising

A from 60 to 95% by weight, based on A + B + C, of a hard matrix comprising

a₁) from 95 to 99.8% by weight, based on A, of at least one vinylaromatic monomer of 8 to 12 carbon atoms and

a₂) from 0.2 to 5% by weight of a polar monoethylenically unsaturated monomer,

B at least 3% by weight, based on A + B + C, of a soft phase prepared by free radical polymerization of the monomers a₁) and a₂) forming the hard matrix, in the presence of an elastomeric grafting base b₁) based on homopolybutadiene having a weight average molecular weight of from 50,000 to 450,000 or of a two-block copolymer of butadiene with from 40 to 90% by weight, based on b₁) of styrene, having a weight average molecular weight of from 100,000 to 300,000, and

C from 0.1 to 5% by weight, based on A + B + C, of a further component,

by conventional polymerization and subsequent working up and recovery of the desired product, wherein the polymerization of the monomers a₁) and a₂) forming the hard matrix is carried out in the presence of both the elastomeric grafting base and the component C, and wherein acrylic acid or methacrylic acid is used as the monomer a₂) and the component C is an ionic crosslinking agent which is selected from the group consisting of the alkali metal salt, the alkaline earth metal salts and the zinc salts of straight-chain fatty acids of 16 to 22 carbon atoms.

2. Use of a molding material prepared as claimed in claim 1 for the production of moldings.

**Revendications**

1. Procédé de préparation d'une masse à mouler thermoplastique résistant aux chocs, comprenant

A de 60 a 95% en poids, par rapport a A + B + C, d'une matrice dure qui contient

a₁) de 95 à 99,8% en poids, par rapport à A, d'au moins un monomère vinylaromatique avec de 8 à 12 atomes de carbone et

a₂) de 0,2 à 5% en poids d'un monomère à monoinsaturation éthylénique polaire

B au moins 3% en poids, par rapport à A + B + C, d'une phase molle préparée par polymérisation radicalaire des monomères a₁) et a₂) constituant la matrice dure en présence d'une base de greffage élastomère b₁) à base d'homopoly-butadiène ayant un poids moléculaire moyen de 50 000 à 450 000 (moyenne en poids) ou d'un copolymère à deux séquences du butadiène avec 40 à 90% en poids de styrène par rapport à b₁) ayant un poids moléculaire moyen de 100 000 à 300 000 (moyenne en poids),

C de 0,1 à 5% en poids, par rapport à A + B + C, d'un autre composant

par un procédé de polymérisation connu en soi et traitement et récupération ultérieurs du produit de valeur,

caractérisé en ce que la polymérisation des monomères $a_1$) et $a_2$) constituant la matrice dure a lieu en présence non seulement de la base de greffage mais aussi du composant C et que l'on utilise comme monomère $a_2$) de l'acide acrylique ou de l'acide méthacrylique et le composant C représente un agent de réticulation ionique qui est choisi dans le groupe des sels alcalins, des sels alcalino-terreux et des sels de zinc d'acides gras à chaîne droite de 16 à 22 atomes de carbone.

2. Utilisation d'une masse à mouler préparée selon la revendication 1, pour la préparation de corps moulés.

Abb. 1

Abb. 2

Abb. 3